# EUROPEAN PATENT APPLICATION

(11) **EP 1 734 693 A1**
(43) Date of publication of application: **20.12.2006**
(21) Application number: 06253117.3
(22) Date of filing: 15.06.2006
(51) Int. Cl.: H04L 12/24, B60R 16/02, H04L 12/46

(54) **Vehicular communication system and method for detecting the presence of network units**

(30) Priority: 16.06.2005 JP 2005176489
(71) Applicant: NISSAN MOTOR COMPANY, LIMITED, Yokohama-shi, Kanagawa 221-0023 (JP)
(72) Inventor: Kanki, Rie c/o Nissan Motor Co., Ltd.,, Yokohama-shi, Kanagawa, 221-0023 (JP)
(74) Representative: Holmes, Matthew William

(57) **Abstract**

Electronic Control Units are connected as nodes communication networks and store a diagnostic result record of their own reception diagnostic results; the diagnostic result record is read from these Electronic Control Units and is analyzed overall by a vehicle onboard gateway device to recognize which Electronic Control Units are actually connected as nodes of communication networks. The gateway device may be used with a diagnostic device that requests transmission of the diagnostic result record from the Electronic Control Units.

## Description

The present invention relates to a vehicle onboard communication system and method and particularly, but not exclusively, to a system and method that involves multiple communication networks connected using vehicle onboard gateway devices.

Various types of vehicle onboard electrical parts perform electrical operations under the control of a controller known as an ECU (Electronic Control Unit) according to the state of the vehicle detected by various types of sensors as well as operational inputs from the driver. In recent years, a type of vehicle onboard communication system has been proposed wherein a communication network is constructed that connects multiple ECUs to a communications bus, which shares the information by communication among the multiple ECUs.

The number of ECUs carried on vehicles has tended to increase in conjunction with the creation of electronic systems in vehicles. When all of the ECUs carried on the vehicle are connected to a single communications bus to construct a communication network, the load on the communications bus becomes too great for effective communication. To accommodate larger numbers of ECUs, multiple communications buses are used to disperse the ECU connections such that multiple communication networks are constructed. An onboard gateway device processes frames of information to interconnect the multiple communication networks and thus to provide for an overall vehicle onboard communication system.

Japanese Kokai Patent Application No. 2002-152244 discloses a scheme processing frames in an onboard gateway device, in order to accommodate the addition of new ECUs. Under this scheme, information from each ECU is received by the vehicle onboard gateway device so that presence of the ECU is recognized, and frames to be transmitted to and from that ECU can be processed.

When a communication problem occurs somewhere in an ECU that is connected to the communication network as a node, the vehicle onboard gateway device cannot recognize the presence of the ECU if the appropriate designation information is not transmitted from the ECU to the vehicle onboard gateway device, even though the ECU is actually connected as a node to the communication network.

It is desired to provide a vehicle onboard communication system that can more reliably recognize the vehicle onboard electronic control units (ECUs), which are connected as nodes to the communication networks, even when a communications problem exists.

The present invention therefore provides a vehicle onboard communications gateway for a vehicle onboard communication system and a method for communicating between networks installed on such a vehicle as set out in the appended claims.

According to another aspect of the present invention there is provided a vehicle onboard communication system, comprising: a plurality of communications networks having thereon a plurality of network-enabled units, at least a first one of the network-enabled units being adapted to a generate and store a diagnostic result record pertaining to data units transmitted by at least a second one of the network-enabled units; and a gateway device coupled to the plurality of communications networks and responsive to at least the first one of the network-enabled units to recognize the presence of at least the second one of the network-enabled units on one of the communications networks, based on the diagnostic result record.

Preferably, the gateway device is adapted to request transmission of the diagnostic result record from at least the first one of the network-enabled units; acquire the diagnostic result record transmitted from at least the first one of the network-enabled units; and recognize the presence on the communications networks of at least the second one of the network-enabled units, based on the diagnostic result record.

The vehicle onboard communication system may further comprise a diagnostic device coupled to at least the first one of the network-enabled units and adapted to request transmission of the diagnostic result record from at least the first one of the network-enabled units; and wherein the gateway device is preferably adapted to acquire the diagnostic result record transmitted from at least the first one of the network-enabled units upon request from the diagnostic device, and recognize the presence on the communications networks of at least the second one of the network-enabled units, based on the diagnostic result record.

The vehicle onboard communication system may further comprise a diagnostic device coupled to at least the first one of the network-enabled units and the system is preferably adapted to acquire the diagnostic result record transmitted from at least the first one of the network-enabled units; and wherein the gateway device is adapted to request from the diagnostic device transmission of the diagnostic result record acquired by the diagnostic device from at least the first one of the network-enabled units; acquire the diagnostic result record transmitted from the diagnostic device; and recognize the presence on the communications networks of at least the second one of the network-enabled units, based on the diagnostic result record.

The vehicle onboard communication system may further comprise a diagnostic device coupled to at least the first one of the network-enabled units and adapted to acquire the diagnostic result record transmitted from at least the first one of the network-enabled units; and recognize the presence on the communications networks of at least the second one of the network-enabled units based on the diagnostic result record; and generate a node information record indicative of whether at least the second one of the network-enabled units is present on any of the communications networks; wherein the gateway device may be adapted to request transmission of the node information record from the diagnostic device, acquire the node information record when transmitted by the diagnostic device; and recognize the presence of at least the second one of the network-enabled units one the communication network based on the node information record.

The gateway device may be further adapted to designate frames to be transferred between the first one of the network-enabled units and the second one of the network-enabled units based on the detection of the second one of the network-enabled units on one of the communications networks.

The gateway device may be further adapted to analyze a frame to be transferred between the first and second network-enabled units based on the detection of the second network-enabled unit on the communications networks.

Furthermore, according to the present invention there is provided a vehicle onboard communications gateway device for transferring frames between a plurality of network-enabled units connected as nodes on a plurality of networks, including at least a first one of the network-enabled units adapted to generate and store a diagnostic result record pertaining to data units transmitted by at least a second one of the network-enabled units; at least one input/output channel adapted for communication with the plurality of network-enabled units over the plurality of networks; and a gateway logic circuit responsive to at least the first one of the network-enabled units to detect the presence of at least the second one of the network-enabled units on one of the communications networks, based on the diagnostic result record.

Preferably, the logic circuit is further adapted to generate a request for transmission of the diagnostic result record from at least the first one of the network-enabled units; acquire the diagnostic result record transmitted by at least the first one of the network-enabled units; and recognize the presence on the communications networks of at least the second one of the network-enabled units based on the diagnostic result record.

Preferably, the at least one input/output channel is further adapted for communication with a diagnostic device that is coupled to at least the first one of the network-enabled units and adapted to request transmission of the diagnostic result record from at least the first one of the network-enabled units; and wherein the gateway logic circuit is further adapted to acquire the diagnostic result record transmitted from at least the first one of the network-enabled units upon request from the diagnostic device, and recognize the presence on the communications networks of at least the second one of the network-enabled units based on the diagnostic result record.

Preferably, the at least one input/output channel is further adapted for communication with a diagnostic device that is coupled to at least the first one of the network-enabled units and adapted to acquire the diagnostic result record transmitted from at least the first one of the network-enabled units; and wherein the gateway logic circuit is adapted to request the diagnostic device to transmit the diagnostic result record acquired by the diagnostic device from at least the first one of the network-enabled units; acquire the diagnostic result record transmitted from the diagnostic device; and recognize the presence on the communications networks of at least the second one of the network-enabled units, based on the diagnostic result record.

Preferably, the at least one input/output channel is further adapted for communication with a diagnostic device that is coupled to at least the first one of the network-enabled units and adapted to acquire the diagnostic result record transmitted from at least the first one of the network-enabled units, recognize the presence on the communications networks of at least the second one of the network-enabled units based on the diagnostic result record; and generate a node information record indicative of whether at least the second one of the network-enabled units is present on any of the communications networks; and wherein the gateway logic circuit is adapted to request transmission of the node information record from the diagnostic device, acquire the node information record when transmitted by the diagnostic device; and recognize the presence of at least the second one of the network-enabled units one the communication network based on the node information record.

The gateway logic circuit may be further adapted to designate frames to be transferred between the first one of the network-enabled units and the second one of the network-enabled units based on the detection of the second one of the network-enabled units on one of the communications networks.

The gateway logic circuit may be further adapted to analyze a frame to be transferred between the first and second network-enabled units based on the detection of the second network-enabled unit on the communications networks.

Furthermore, according to the present invention there is provided a method for communicating between networks installed on a vehicle and having thereon a plurality of network-enabled units, comprising: generating on at least a first one of the network-enabled units a diagnostic result record pertaining to data units transmitted by at least a second one of the network-enabled units; requesting at least the first one of the network-enabled units to transmit the diagnostic result record over one of the communication networks; acquiring the diagnostic result record generated by at least the first one of the control units; and detecting the presence of the second one of the control units on one of the communications networks based on the diagnostic result record.

Preferably, a gateway device is provided to transfer data between the plurality of networks. The gateway device may request at least the first one of the control units to transmit the diagnostic result record and detects the presence of the second one of the control units on one of the communications networks based on the diagnostic result record.

Preferably, a diagnostic device is coupled to at least the first one of the network-enabled units and providing a gateway device to transfer data between the plurality of networks, wherein requesting at least the first one of the network-enabled units to transmit the diagnostic result record over one of the communication networks is performed by the diagnostic device; acquiring the diagnostic result record generated by at least the first one of the network-enabled units is performed by the gateway device; and detecting the presence of the second one of the network-enabled units on one of the communications networks based on the diagnostic result record is performed by the gateway device.

Preferably, a diagnostic device is coupled to at least the first one of the network-enabled units and providing a gateway device to transfer data between the plurality of networks. Preferably, requesting at least the first one of the network-enabled units to transmit the diagnostic result record over one of the communication networks, is performed by the diagnostic device; acquiring the diagnostic result record generated by at least the first one of the network-enabled units, is performed by the diagnostic device; and detecting the presence of the second one of the network-enabled units on one of the communications networks based on the diagnostic result record, is performed by the gateway device; and preferably the method further comprises generating a request by the gateway device for the diagnostic device to transmit the diagnostic result record to the gateway device.

Preferably, a diagnostic device is coupled to at least the first one of the units and providing a gateway device to transfer data between the plurality of networks. Preferably, requesting at least the first one of the network-enabled units to transmit the diagnostic result record over one of the communication networks, is performed by the diagnostic device; acquiring the diagnostic result record generated by at least the first one of the network-enabled units, is performed by the diagnostic device; and detecting the presence of at least the second one of the network-enabled units on one of the communications networks, based on the diagnostic result record, is performed by the diagnostic device; wherein the method further comprises generating a request by the gateway device for the diagnostic device to transmit a node information record indicative of whether at least the second one of the network-enabled units is on one of the communications networks.

Preferably, a gateway device is provided to transfer data between the plurality of networks; and the gateway device may be used to designate frames to be transferred between the first one of the network-enabled units and the second one of the network-enabled units based on the detection of the second one of the network-enabled units on one of the communications networks.

Preferably, a gateway device is provided to transfer data between the plurality of networks; and the gateway device may be used to analyze a frame to be transferred between the first and second network-enabled units based on the detection of the second network-enabled unit on the communications networks.

Within the scope of this application it is envisaged that the various aspects, embodiments and alternatives set out in the preceding paragraphs, in the claims and in the following description may be taken individually or in any combination thereof.

The present invention will now be described, by way of example only, with reference to the accompanying drawings in which:
Figure 1 is a block diagram of a vehicle onboard communication system in accordance with a first embodiment.
Figure 2 is a block diagram illustrating the internal constitution of an ECU and the vehicle onboard gateway device in the vehicle onboard communication system of Figure 1.
Figure 3 is a flow chart illustrating the operation of the vehicle onboard gateway device shown in Figure 2.
Figure 4 is a diagram illustrating the scheme of connection node recognition based on the diagnostic result information frames received by the connection node recognition part of the vehicle onboard gateway device shown in Figure 2.
Figure 5 is a diagram illustrating the scheme for designating the transfer frames by the transfer frame designation part, based on the output of the connection node recognition part in the vehicle onboard gateway device shown in Figure 2.
Figure 6 is a block diagram illustrating an alternative embodiment of the vehicle onboard gateway device shown in Figure 2.
Figure 7 is a block diagram of a vehicle onboard communication system in accordance with a second embodiment, including diagnostic device.
Figure 8 is a flow chart illustrating the configuration operation of the vehicle onboard communication system of Figure 7.
Figure 9 is a flow chart illustrating the operation of the vehicle onboard communication system of Figure 7.
Figure 10 is a block diagram of a vehicle onboard communication system in accordance with a third embodiment, including a diagnostic device.
Figure 11 is a flow chart illustrating the process of collecting diagnostic result information in the vehicle onboard communication system of Figure 10.
Figure 12 is a flow chart illustrating the proccess of designating transfer frames in the vehicle onboard communication system of Figure 10.
Figure 13 is a block diagram of a vehicle onboard communication system in accordance with a fourth embodiment, including a diagnostic device.
Figure 14 is a flow chart illustrating the process recognizing connection nodes in the vehicle onboard communication system of Figure 13.
Figure 15 is a flow chart illustrating the process of designating transfer frames in the vehicle onboard communication system of Figure 13.

In the disclosed embodiments, a vehicle onboard gateway device recognizes the various vehicle onboard ECUs or other network-enabled units that are connected as nodes in the communication networks. The various vehicle onboard electronic control units are connected as nodes in the communication networks, and each functions to diagnose reception of a frame to be received by itself and to store the result as a diagnostic result information or record. When a communication problem prevents a first ECU from receiving an expected frame from a second ECU on the network, the first ECU logs an error as diagnostic result record. From this information, it is possible to determine that the second ECU is connected as a node in the communication network. Consequently, it is possible for the vehicle onboard gateway device to determine which ECUs are connected as nodes in the communication network by collecting the diagnostic result information for the various vehicle onboard electronic control units. The vehicle onboard gateway device can then reliably recognize the ECUs connected as nodes to the communication network and properly perform frame transfer processing between multiple communication networks.

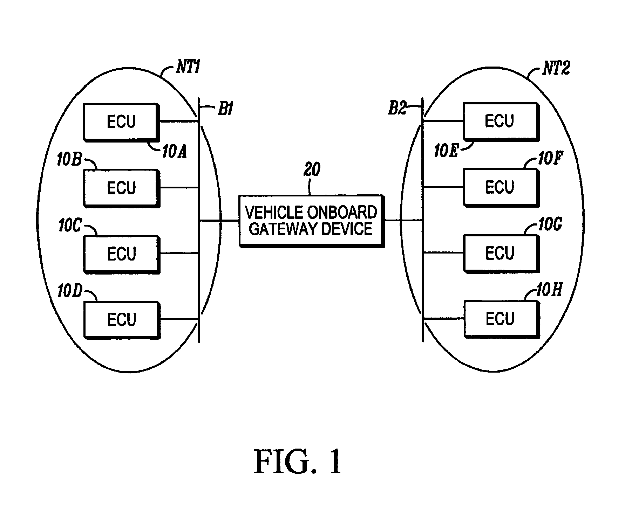

The vehicle onboard communication systems disclosed below perform communication between multiple ECUs 10 (serving as vehicle onboard electronic control units carried in the vehicle (or other network-enabled units), and shares the information. For example, as shown in Figure 1, multiple communication networks (two communication networks NT1, NT2 in the example shown in Figure 1) are combined by vehicle onboard gateway device 20, so that an overall component system is formed. In the vehicle onboard communication system shown in Figure 1, a portion of the frame traveling in communications bus B1 of one communication network NT1 is transferred via vehicle onboard gateway device 20 to communications bus B2 of another communication network NT2, and a portion of the frame traveling in communications bus B2 of the other communication network NT2 is transferred via vehicle onboard gateway device 20 to communications bus B1 of the one communication network NT1. As a result, it is possible to perform transceiving of frames between ECU 10A, 10B, 10C, 10D connected to communications bus B1 as nodes of one communication network NT1 and ECU 10E, 10F, lOG, 10H connected to communications bus B2 as nodes of the other communication network NT2.

In the vehicle onboard communication system, each of ECU 10A, 10B, 10C, 10D connected to communications bus B1 and ECU 10E, 10F, 10G, 10H connected to communications bus B2 (hereinafter to be referred to as ECU 10 when there is no need to make specific distinctions among them) performs reception diagnostic as to whether the transmission frame is actually received from another ECU 10 that itself becomes receiving via communication networks NT1, NT2, and stores the result as the diagnostic result record. The diagnostic result record stored in the ECU 10 is basically read from ECU 10 by connecting the diagnostic device when problems develop in communication networks NT1, NT2. For example, it is used for problem analysis, such as specifying the location of wire breakage in the communications bus.

The diagnostic result record stored in the ECU 10 is used in the processing of vehicle onboard gateway device 20, and based on the diagnostic result record stored by ECU 10, vehicle onboard gateway device 20 recognizes which ECUs 10 are connected as nodes to communication networks NT1, NT2. This is a major characteristic feature of the present invention. In a first embodiment, the transmission request for diagnostic result information with respect to ECU 10 is performed by vehicle onboard gateway device 20. In a second embodiment, the transmission request for diagnostic result information for ECU 10 is performed by the diagnostic device, and as a response to the transmission request of the diagnostic device, the diagnostic result information transmitted from ECU 10 is received by vehicle onboard gateway device 20. In a third embodiment, the diagnostic result information transmitted from ECU 10 is received by the diagnostic device, and transmission of the diagnostic result information by the diagnostic device is requested by vehicle onboard gateway device 20. In a fourth embodiment, which ECUs 10 are actually connected as nodes of communication networks NT1, NT2 are recognized and is stored as the node information, and vehicle onboard gateway device 20 requests transmission of the node information.

### First Embodiment

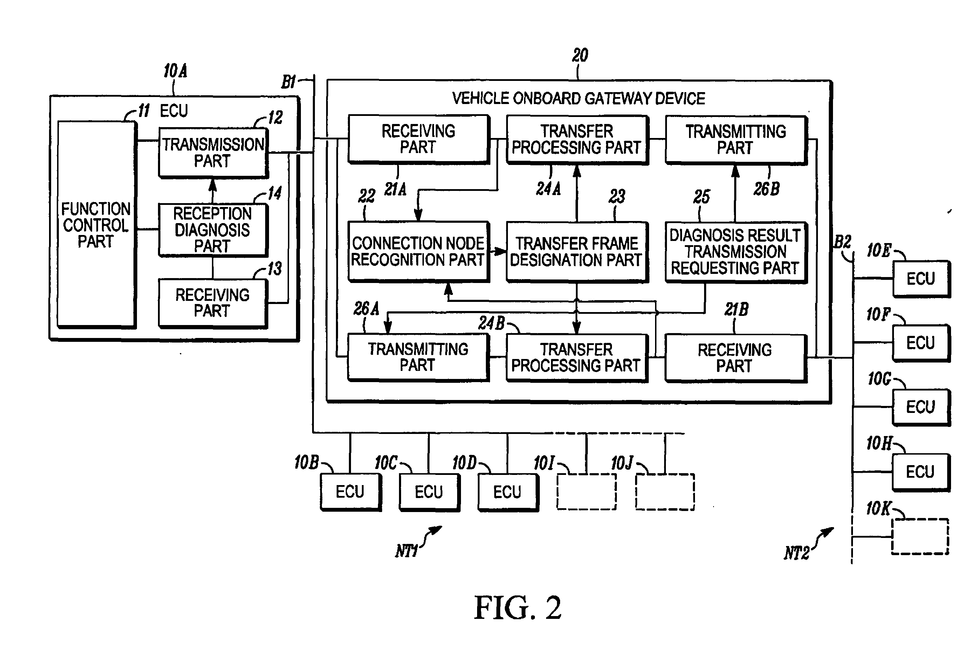

Referring to Figures 1-6, the first embodiment will be explained. As shown in Figure 1, ECUs 10 are connected as nodes to communication networks NT1, NT2 and vehicle onboard gateway device 20. ECUs 10 and vehicle onboard gateway devices 20 have the internal constitution shown in Figure 2.

Each ECU 10 has function control part 11, transmitting part 12, receiving part 13, and reception diagnostic part 14.

The function control part 11 performs overall control of the function of the ECU 10, and it executes control of the operation of the ECU 10 based on detection values from the various types of sensors connected to the ECU 10 and the operational inputs from the driver, as well as the various types of information transmitted as data frames from other ECUs 10. Also, the function control part 11 has the function of preparing the data frame that can be transmitted to another ECU 10 for information requested by the other ECU 10 depending on the information acquired by this ECU 10.

The transmitting part 12 performs transmission processing of the data frame prepared by function control part 11 and the diagnostic result information frame prepared using reception diagnostic part 14. The data frame and the diagnostic result information frame transmitted from the transmitting part 12 travel in the communications bus (communications bus B1 or communications bus B2) connected to the ECU 10. The receiving part 13 monitors the frames traveling in the communications bus (communications bus B1 or communications bus B2) connected to ECU 10. Receiving part 13 for a particular ECU 10 receives those data frames addressed to that particular ECU 10 that are s transmitted from another ECU or the vehicle onboard gateway device 20 travel.

The reception diagnostic part 14 determines whether a data frame that should be received from another ECU 10 has been actually received by an ECU 10. The reception diagnostic part 14 stores the result of reception diagnostic as the diagnostic result information, and when receiving part 13 receives the diagnostic result transmission request frame transmitted from vehicle onboard gateway device 20, then reception diagnostic part 14 forms a diagnostic result information frame indicating the diagnostic result information. The diagnostic result information frame prepared with reception diagnostic part 14 is transmitted by transmitting part 12 to vehicle onboard gateway device 20 via the communications bus (communications bus B 1 or communications bus B2) connected to the ECU 10.

Figure 2 shows the internal constitution of only ECU 10A. However, the other ECUs 10B-10H also have the same internal constitution. Also, in the vehicle onboard communication system of the present embodiment, in addition to ECUs 10A-10H, ECU 101 and ECU 10J also can be connected to communications bus B1, and ECU 10K can be connected to communications bus B2. ECUs 10I, 10J, 10K are in the unconnected state.

Vehicle onboard gateway device 20 has receiving parts 21 a, 21 b, connection node recognition part 22, transfer frame designation means 23, transfer processing parts 24a, 24b, diagnostic result transmission request parts 25a, 25b, and transmitting parts 26a, 26b.

Receiving part 21a contained in vehicle onboard gateway device 20 receives the various frames that travel in communications bus B1. If the received frames are data frames from ECUs 10 connected to communications bus B1, the data frames are sent by receiving part 21a to transfer processing part 24a, and if a received frame is a diagnostic result information frame from ECU 10 connected to communications bus B1, the diagnostic result information frame is sent to connection node recognition part 22. Also, receiving part 21b receives various types of frames traveling in communications bus B2 and fetches them into vehicle onboard gateway device 20. If the received frame is a data frame from an ECU 10 connected to communications bus B2, the receiving part 21b sends the data frame to transfer processing part 24b, and if a received frame is the diagnostic result information frame from an ECU 10 connected to communications bus B2, the diagnostic result information frame is sent to connection node recognition part 22.

The connection node recognition part 22 recognizes ECUs 10 connected as nodes of communication networks NT1, NT2 based on the diagnostic result information frame sent from each ECU 10 as a response to the diagnostic result transmission request frame transmitted by vehicle onboard gateway device 20. That is, while connection node recognition part 22 fetches the diagnostic result information frames transmitted from ECUs 10 connected to communications bus B1 and received by receiving part 21 a, it fetches the diagnostic result information frames received from ECUs 10 connected to communications bus B2 by receiving part 21b. These diagnostic result information frames are then analyzed overall, and which ECUs 10 are actually connected among ECUs 10A-10K that can be connected as nodes of communication networks NT1, NT2 is recognized.

The transfer frame designation means 23 sets up the data frames to be transferred between communication network NT1 and communication network NT2 by the vehicle onboard gateway device 20 based on the recognition results of connection node recognition part 22. That is, the transfer frame designation means 23 holds the frame directory pertaining to ECUs 10A-10K that can be connected as nodes of communication networks NT1, NT2 (the list of data frames that should be transferred as data frames by ECUs 10A-10K) beforehand, and which ECUs 10 are connected as nodes of communication networks NT1, NT2 are connected is recognized by connection node recognition part 22. As a result, the information is read, and among the data frames registered in the frame directory, the data frames related to ECUs 10 actually connected as nodes of communication networks NT1, NT2 are recognized as the frames to be transferred, and their IDs (identification Nos.) are stored.

The transfer processing part 24a selects the data frames needing to be transferred from among the data frames transmitted by ECUs 10 connected to communications bus A and received by receiving part 21 a, and sends them to transmitting part 26b. That is, based on the IDs of the data frames established as transfer frames by transfer frame designation part 23, the transfer processing part 24a filters the data frames received by receiving part 21 a, and sends only the data frames needing to be transferred to transmitting part 26b, while discarding the data frames not needing to be transferred. Also, transfer processing part 24b selects the data frames needing to be transferred from among the data frames received from ECUs 10 connected to communications bus B and received by receiving part 21b, and sends them to transmitting part 26a. That is, based on the IDs of the data frames established as transfer frames by transfer frame designation part 23, the transfer processing part 24b filters the data frames received by receiving part 21b, and sends only the data frames needing to be transferred to transmitting part 26a, while discarding the data frames not needing to be transferred. It will be appreciated that receiving parts 21 and transmitting parts 26 function as an input/output port of gateway device 20. Also, the functions of gateway device 20 may be implemented by means of a processor or other logic circuit.

Diagnostic result transmission requesting part 25 forms the diagnostic result transmission request frames that request transmission of diagnostic result information stored in reception diagnostic part 14 of ECUs 10 for each ECU 10 connected as nodes of communication networks NT1, NT2. The diagnostic result transmission request frame formed by a diagnostic result transmission requesting part 25 is transmitted from transmitting part 26a to ECUs 10 connected to communications bus B1, and from transmitting part 26b to ECUs 10 connected to communications bus B2.

Transmitting part 26a performs transmission processing of data frames selected as data frames needing to be transferred by transfer processing part 24b and the diagnostic result transmission request frames prepared using diagnostic result transmission requesting part 25. The transmission processing in the transmitting part 26a enables data frames to be transferred from ECUs 10 connected to communications bus B2 to the communications bus B 1 side, and these are received by ECUs 10 connected to communications bus B1. Also, transmitting part 26b performs transmission processing of data frames selected as data frames needing to be transferred by transfer processing part 24a and the diagnostic result transmission request frames prepared using diagnostic result transmission requesting part 25. The transmission processing of the transmitting part 26b enables data frames to be transferred from ECUs 10 connected to communications bus B1 to the communications bus B2 side, and is received by ECU 10 connected to communications bus B2.

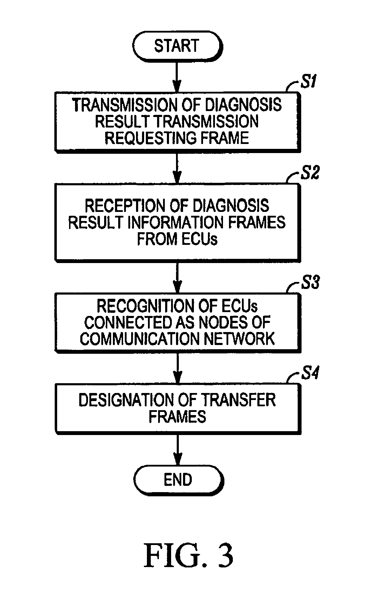

In the vehicle onboard communication system of the first embodiment, when the system is started, for example, the transfer frames are established by vehicle onboard gateway device 20 according to the sequence shown in Figure 3. In step S1, diagnostic result transmission requesting part 25 of vehicle onboard gateway device 20 forms the diagnostic result transmission request frame. The diagnostic result transmission request frame formed by the diagnostic result transmission requesting part 25 is sent from transmitting part 26a onto communications bus B 1 to be received by the ECUs connected to communications bus B1, and it is sent from transmitting part 26b onto communications bus B2 to be received by ECU 10 connected to communications bus B2.

As a response to the diagnostic result transmission request frame transmitted in step S1, in step S2 diagnostic result information frames are transmitted from ECUs 10 and these diagnostic result information frames from ECUs 10 are received by receiving parts 2 1 a, 2 1 b and sent to connection node recognition part 22.

In step S3 connection node recognition part 22 makes an overall analysis of the diagnostic result information from ECU 10, and processing is performed enabling recognition of ECUs 10 connected as nodes to communication networks NT1, NT2.

In the following, an explanation will be given with reference to specific examples. In the embodiment of Figure 2, in addition to ECUs 10A, 10B, 10C, 10D actually connected to communications bus B1 as nodes of communication network NT1, ECU 10I, 10J can also be connected as to communications bus B1 nodes of communication network NT1. Also, in addition to ECUs 10E, 10F, 10G, 10H actually connected to communications bus B2 as nodes of communication network NT2, ECU 10K can also be connected to communications bus B2 as a node of communication network NT2. ECU 10A then receives the data frames from ECUs 10B, 10E, 10H; ECU 10B receives the data frames from ECUs 10A, 10E, 10G; ECU 10C receives the data frames from ECUs 10B, 10E, 10H; ECU 10D receives the data frames from ECUs 10A, 10E, 10F, 10G; ECU 10E receives the data frames from ECUs 10B, 10G; ECU 10F receives the data frames from ECUs 10B, 10E, 10H; and ECU 10G receives the data frames from ECUs 10A, 10D, 10E. On the other hand, due to certain transmission problems in ECU 10H, no transmission of the frames can be performed in this state.

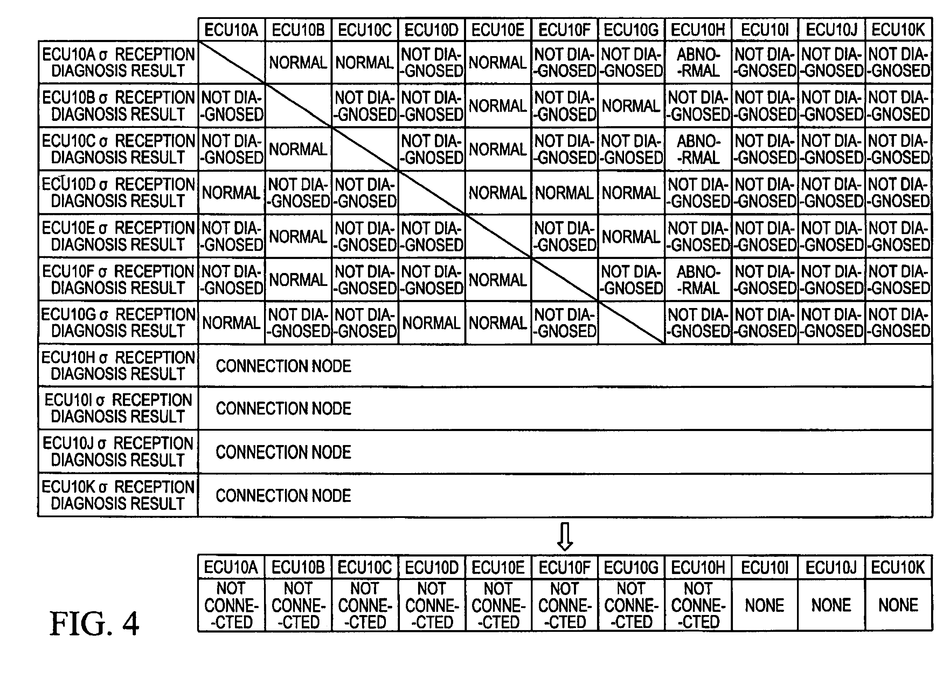

In this case, when the diagnostic result information frames sent from ECUs 10 in response to the diagnostic result transmission request frame are analyzed overall, the analysis result shown in Figure 4 is obtained. Among the reception diagnostic results for ECUs 10 shown in Figure 4, "normal" indicates that the ECUs 10 can receive the data frames from all of the other ECUs 10 normally. On the other hand, "abnormal" indicates that the ECU 10 cannot receive the data frames from the other ECUs 10 normally. "Not diagnosed" indicates that no reception diagnostic is performed.

In the connection node recognition processing of step S3 (see Figure 3), first, connection node recognition part 22 recognizes actual connection as nodes of communication networks NT1, NT2 for ECUs 10 as the transmission units of the diagnostic result information frames. In the example shown in Figure 4, connection node recognition part 22 recognizes that the ECUs 10A-10G are actually connected as nodes of communication networks NT1, NT2 for ECUs 10A-10G serving as the transmission units of the received diagnostic result information frames.

Then, connection node recognition part 22 checks whether there is an ECU 10 having its reception diagnostic result left in the reception diagnostic result of another ECU 10, although no diagnostic result information frame is transmitted (vehicle onboard gateway device 20 has no reception). If there exists such an ECU 10, it is recognized for this ECU 10 that practical connection as a node of communication networks NT1, NT2 is achieved. In the example shown in Figure 4, although vehicle onboard gateway device 20 did not receive the diagnostic result information frame from ECU 10H, when the diagnostic result information frames transmitted from ECUs 10A-10G are found, a diagnostic result indicating "abnormality" appears for ECU 10H in the reception diagnostic result of ECU 10A, 10C, 10F. That is, although ECU 10H does not transmit of a frame, it can be judged that it is connected as node of communication network NT2. Consequently, in addition to ECUs 10A-10G, connection node recognition part 22 also recognizes that actual connection of ECU 10H as a node of communication networks NT1, NT2.

On the other hand, for an ECU 10 for which the diagnostic result information frame is not transmitted, and the result of reception diagnostic also does not appear in the reception diagnostic result of another ECU 10, although it may be possible to perform a connection as a node of communication networks NT1, NT2, connection node recognition part 22 judges that actually no connection is performed. In the example shown in Figure 4, when vehicle onboard gateway device 20 not received a diagnostic result information frame from ECU 101, 10J, 10K, and it checks the diagnostic result information frames transmitted from the other ECUs 10A-10G, all of the ECU 10I, 10J, 10K become "not diagnosed." Consequently, for each of the ECUs 10I, 10J, 10K, connection node recognition part 22 judges that there is no connection as a node of communication networks NT1, NT2.

When the recognition processing of the connection nodes has been performed using connection node recognition part 22 in step S3, then in step S4, based on the recognition results of connection node recognition part 22, transfer frame designation part 23 performs the processing for setting up the data frames that should be transferred between communication network NT1 and communication network NT2 by vehicle onboard gateway device 20.

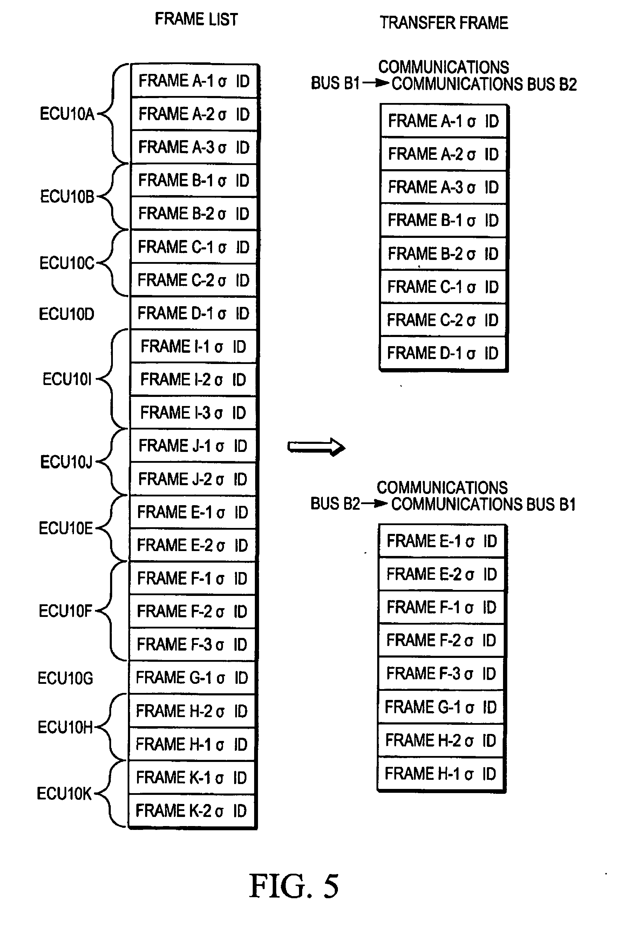

More specifically, for example, as shown in Figure 5, transfer frame designation part 23 holds the frame directory related to ECUs 10A-10K that can possibly be connected as nodes of communication networks NT1, NT2. Registered in this frame directory are all of the IDs of the data frames that should be transmitted as data frames transmitted by ECU 10A-10K. When the recognition processing of the connection nodes has been performed by connection node recognition part 22, based on the recognition results, transfer frame designation part 23 stores the IDs of only those data frames registered in the frame directory that relate to ECUs 10 actually connected as nodes of communication networks NT1, NT2 as candidate transfer frames.

In this example, because ECUs 10A-10H are recognized as connecting nodes by connection node recognition part 22, transfer frame designation part 23 stores the ID of data frame A-1, the ID of data frame A-2, the ID of data frame A-3, the ID of data frame B-1, the ID of data frame B-2, the ID of the data frame C-1, the ID of the data frame C-2, and the ID of data frame D-1, as the IDs for transfer frames that should be transferred from the side of communications bus B 1 to the side of communications bus B2 and stores the ID of data frame E-1, the ID of data frame E-2, the ID of data frame F-1, the ID of data frame F-2, the ID of data frame F-3, the ID of data frame G-1, the ID of data frame H-1, and the ID of data frame H-2 as the IDs for transfer frames that should be transferred from the side of communications bus B2 to the side of communications bus B 1.

In the vehicle onboard communication system of the first embodiment, as explained above, when the designation processing of the transfer frame in vehicle onboard gateway device 20 is performed, then, among the data frames transmitted from ECUs 10A-10D connected to communications bus B1, those data frames addressed to ECUs 10E-10H connected to communications bus B2 are transferred to the side of communications bus B2 by means of processing in transfer processing part 24a of vehicle onboard gateway device 20, and they are received by destination ECUs 10E-10H. Also, processing by transfer processing part 24b of vehicle onboard gateway device 20 enables the data frames addressed to ECUs 10A-10D connected to communications bus B1 among the data frames transmitted from ECUs 10E-10G connected to communications bus B2 to be transferred to the side of communications bus B1, where they are received by destination ECUs 10A-10D.

As explained in detail above with reference to examples, in the vehicle onboard communication system of the present embodiment, at a prescribed timing when the system is started, diagnostic result transmission requesting part 25 of vehicle onboard gateway device 20 forms the diagnostic result transmission request frames, and the diagnostic result transmission request frames are transmitted via transmitting parts 26a, 26b to ECUs 10 to determine the nodes of communication networks NT1, NT2 connected to communications buses B1, B2. Then, as a response to the diagnostic result transmission request frames, the diagnostic result information frames transmitted from ECUs 10 are received by receiving parts 21 a, 21 b, and based on the diagnostic result information frames received from ECU 10, connection node recognition part 22 recognizes which ECUs 10 are actually connected to communications buses B1, B2 as nodes of communication networks NT1, NT2. Then, based on the recognition result of connection node recognition part 22, transfer frame designation part 23 designates as transfer frames the data frames that should be transferred between communications bus B1 of communication network NT1 and communications bus B2 of communication network NT2. Consequently, for this vehicle onboard communication system, even when communication problems occur in any of the ECUs 10 connected to communications buses B1, B2 as nodes of communication networks NT1, NT2, ECUs 10 connected to communications buses B1, B2 as nodes of communication networks NT1, NT2 can be recognized reliably, and designation of the transfer frames and other processing can be performed appropriately.

Also, in the vehicle onboard communication system of the first embodiment, ECUs 10 connected as nodes to communication networks NT1, NT2 transmit no [frame] designation information to vehicle onboard gateway device 20, and the presence of such information can be recognized by vehicle onboard gateway device 20.

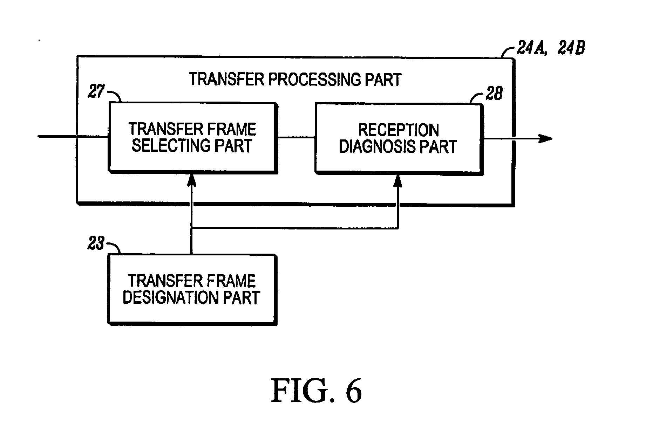

For the vehicle onboard communication system, transfer processing parts 24a, 24b of vehicle onboard gateway device 20 only perform transfer processing the data frames. However, transfer processing parts 24a, 24b of vehicle onboard gateway device 20 may also have the function of performing the same reception diagnostic as ECUs 10. In this case, for example, as shown in Figure 6, transfer processing parts 24a, 24b of vehicle onboard gateway device 20 have transfer frame selecting part 27 and reception diagnostic part 28. Then the data frames from ECUs 10 fetched into vehicle onboard gateway device 20 by receiving parts 21a, 21b are filtered in transfer frame selecting part 27 based on the information of transfer frame designation part 23, and only the transfer frames are transferred after the execution of reception diagnostic by reception diagnostic part 28. In reception diagnostic part 28, reception diagnostic is performed for all of the data frames designated as the transfer frames in transfer frame designation part 23, and the result is stored as the diagnostic result information. Just as in the diagnostic result information of ECUs 10, this diagnostic result information is read by connecting diagnostic device so that it can be used in problem analysis.

In this way, when transfer processing parts 24a, 24b of vehicle onboard gateway device 20 possess the reception diagnostic function, the diagnostic result information of vehicle onboard gateway device 20 is used together with the diagnostic result information of ECUs 10 in performing the problem analysis. As a result, it is possible to improve the accuracy of problem analysis. The following explanation refers to specific examples. For example, assuming a communications problem occurs in some of ECUs 10 (ECU 10H in this example) connected as nodes of communication networks NT1, NT2, and transmission of the data frame cannot be performed, the diagnostic result "abnormality" remains as the result of reception diagnostic by another ECU 10 (such as ECU 10A). When the diagnostic result information alone is taken as a reference, however, it is impossible to judge on which of communications buses B1, B2 the problem is located, and whether the problem lies in the vehicle onboard gateway device 20. On the other hand, when the diagnostic result information of vehicle onboard gateway device 20 is used together with the diagnostic result information of the ECUs 10, it is possible to perform a more detailed analysis. In the example, it is possible to uniquely identify the communication problem of ECU 10H.

### Second Embodiment

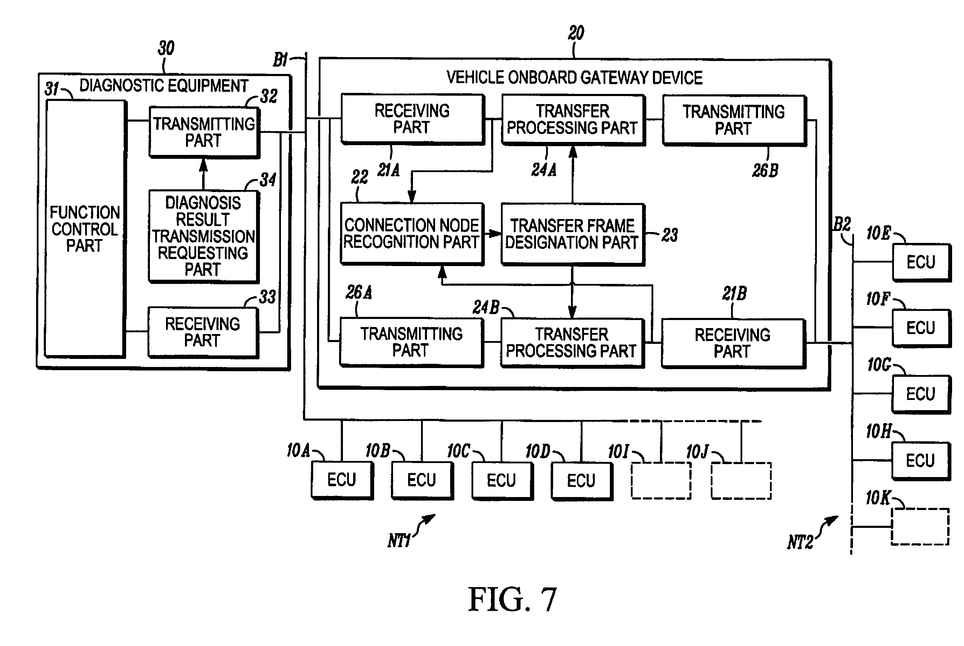

Referring to Figures 7-9, the second embodiment is illustrated. In this example, the vehicle onboard communication system performs the following operation: the transmission request for the diagnostic result information of each ECU 10 is performed by means of the diagnostic device; corresponding to the transmission request by the diagnostic device, the diagnostic result information transmitted from ECUs 10 is received by vehicle onboard gateway device 20, and recognition of the connecting nodes and designation of the transfer frames are performed. The other features of the constitution of the vehicle onboard communication system are the same as those in the first embodiment of Figures 1-6. Consequently, in the following, only the characteristic features of the present embodiment will be explained, the same part numbers are adopted for parts that are the same as in Embodiment 1, and will not be explained again.

As shown in Figure 7, in the vehicle onboard communication system of the second embodiment, either communications bus B1 of communication network NT1 or communications bus B2 of communication network NT2 (communications bus B1 in the example shown in Figure 7) is connected to diagnostic device 30. This diagnostic device 30 can be used in analysis of problems occurring in communication networks NT1, NT2 or to perform other diagnostic activities. In the vehicle onboard communication system of the present embodiment, the diagnostic device 30 is used to recognize ECUs 10 actually connected as nodes of communication networks NT1, NT2 to communications buses B1, B2 by vehicle onboard gateway device 20.

As shown in Figure 7, diagnostic device 30 is composed of function control part 31, transmitting part 32, receiving part 33, and diagnostic result transmission requesting part 34.

The function control part 31 performs overall control of the functions of diagnostic device 30. Using the diagnostic result information transmitted as diagnostic result information frames from ECUs 10 of communication networks NT1, NT2 as the object of diagnostic, analysis of problems generated in communication networks NT1, NT2 takes place. Also, function control part 31 executes recognition processing by vehicle on board gateway device 20 for ECUs 10 actually connected to communications buses B1, B2 as nodes of communication networks NT1, NT2 (hereinafter to be referred to as the configuration), and it issues the configuring start command to notify vehicle onboard gateway device 20 to start configuration when the configuration is to be executed.

The transmitting part 32 performs transmission processing for the configuring start command prepared using function control part 31, and the transmission processing for the diagnostic result transmission request frame formed using diagnostic result transmission requesting part 34. The configuring start command transmitted from transmitting part 12 is received by vehicle onboard gateway device 20. Also, the diagnostic result transmission request frame transmitted from transmitting part 12 is received by ECUs 10 actually connected to communications buses B1, B2 as nodes of communication networks NT1, NT2.

The receiving part 33 receives the diagnostic result information frames transmitted from ECUs 10 as a response to the diagnostic result transmission request frame. The diagnostic result information frames from ECUs 10 received by the receiving part 33 are sent to connecting portion 21 and are used in analysis of problems.

The diagnostic result transmission requesting part 34 forms the diagnostic result transmission request frame for requesting transmission of the diagnostic result information stored in reception diagnostic part 14 of each ECU 10 for ECUs 10 connected as nodes of communication networks NT1, NT2. Formation of the diagnostic result transmission request frame by diagnostic result transmission requesting part 34 occurs when function control part 31 analyzes problems as well as when function control part 31 executes configuration. Also, in the vehicle onboard communication system of the present embodiment, diagnostic device 30 includes diagnostic result transmission requesting part 34. Consequently, there is no need for vehicle onboard gateway device 20 to have diagnostic result transmission requesting part 25.

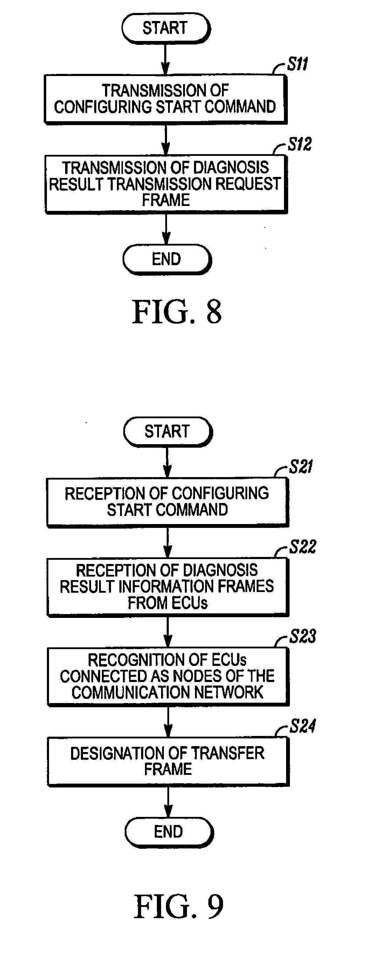

In the vehicle onboard communication system of the second embodiment, for example, at the prescribed timing at system start, etc., configuration is executed by diagnostic device 30 according to the sequence shown in Figure 8 and in tandem with this, vehicle onboard gateway device 20 is used to designate the transfer frames according to the sequence shown in Figure 9.

That is, on the diagnostic device 30 side first of all function control part 31 prepares the configuring start command in step S11. The configuring start command prepared by function control part 31 is transmitted from transmitting part 32 to vehicle onboard gateway device 20. Then, in step S21, under the control of function control part 31, diagnostic result transmission requesting part 34 forms the diagnostic result transmission request frame. The diagnostic result transmission request frame prepared by diagnostic result transmission requesting part 34 is transmitted from transmitting part 32 to ECUs 10.

On the other hand, on the vehicle onboard gateway device 20 side, in step S21 the configuring start command transmitted from diagnostic device 30 is received by receiving part 21a or receiving part 21b. Then when the diagnostic result information frames are transmitted from ECUs 10 in response to the diagnostic result transmission request frame transmitted from diagnostic device 30, the diagnostic results frame from ECU 10 traveling on communications buses B1, B2 are received by receiving parts 21a, 21 b in step S22 and then sent to connection node recognition part 22. Then, in step S23, connection node recognition part 22 performs an overall analysis of the diagnostic result information frames from ECUs 10 using the same scheme as that in the first embodiment, and performs the processing of recognizing ECUs 10 that are connected as nodes of communication networks NT1, NT2. Then, in step S24, based on the recognition result of connection node recognition part 22, transfer frame designation part 23 uses the same scheme as that in the first embodiment to designate the data frames that should be transferred between communication network NT1 and communication network NT2 by vehicle onboard gateway device 20.

As explained above, for the vehicle onboard communication system of the first embodiment, vehicle onboard gateway device 20 receives the diagnostic result information frames transmitted from ECUs 10 in response to the diagnostic result transmission request frame transmitted from diagnostic device 30, and based on the diagnostic result information frames received from the ECUs 10, recognizes which ECUs 10 are actually connected to communications buses B1, B2 as nodes of communication networks NT1, NT2. Then, based on the recognition result, the data frames to be transferred between communications bus B1 of communication network NT1 and communications bus B2 of communication network NT2 are designated. Consequently, in this vehicle onboard communication system, just as with the first embodiment, even when communication problems occur among ECUs 10 connected to communications buses B1, B2 as the nodes of communication networks NT1, NT2, it is still possible to reliably recognize ECUs 10 connected to communications buses B1, B2 as nodes of communication networks NT1, NT2, and it is possible to perform appropriate processing, such as designating transfer frames.

For the vehicle onboard communication system of the present embodiment, because only diagnostic device 30 performs transmission of the diagnostic result transmission request frame, it is possible to avoid the problem of collisions between the diagnostic result transmission requests that used to occur when both vehicle onboard gateway device 20 and diagnostic device 30 requested the diagnostic result information.

In addition, for the vehicle onboard communication system in the present embodiment, ECUs 10 connected as nodes to communication networks NT1, NT2 can be configured corresponding to the diagnostic result transmission request from diagnostic device 30, and there is no need to make changes according to the request from vehicle onboard gateway device 20. Consequently, the constitution of ECUs 10 can be further simplified.

### Third Embodiment

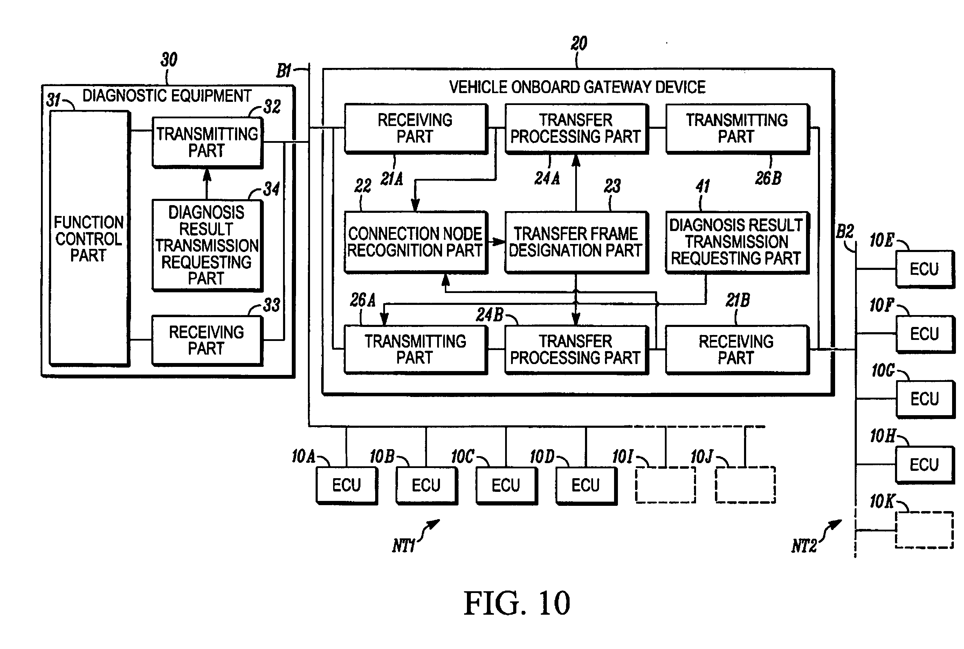

Referring to Figures 10-12, the third embodiment of the present invention will be explained. In this example, the diagnostic result information transmitted from ECUs 10 is received by diagnostic device 30 and then sent to vehicle onboard gateway device 20, and recognition of the connecting nodes and setting of the transfer frames are performed based on the diagnostic result information transmitted from diagnostic device 30 by vehicle onboard gateway device 20. The other basic features of the constitution of the vehicle onboard communication system are the same as those in the first and second embodiments. Consequently, in the following, only the characteristic features of the present embodiment will be explained, while parts the same as those in the first and second embodiments will be given the same part numbers, and will not be explained again.

In the vehicle onboard communication system of the third embodiment, diagnostic device 30 transmits the diagnostic result transmission request frame to ECUs 10, and diagnostic device 30 receives the diagnostic result information frames transmitted in response from ECUs 10. Then, diagnostic device 30 summarizes the diagnostic result information frames received from ECUs 10 and stores them in the memory in function control part 31. Also, as shown in Figure 10, vehicle onboard gateway device 20 has diagnostic result transmission requesting part 41 that requests transmission of the diagnostic result information frames from ECUs 10 stored in diagnostic device 30.

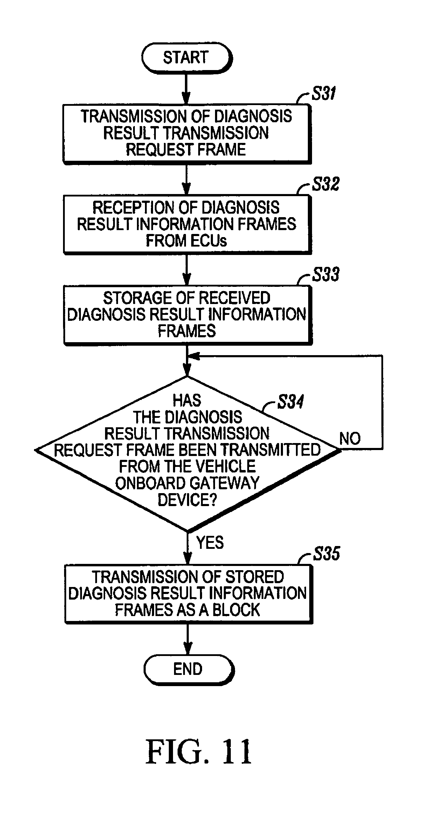

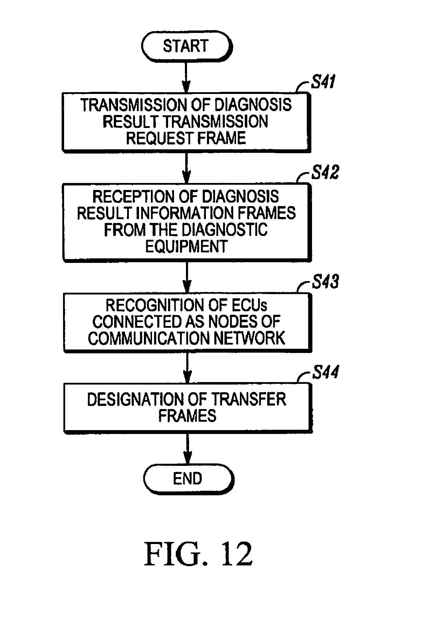

According to the sequence shown in Figure 11, in the vehicle onboard communication system of the present embodiment, diagnostic device 30 collects the diagnostic result information frames from ECUs 10, and the transfer frames are set designated according to the sequence shown in Figure 12 by vehicle onboard gateway device 20.

In step S31, under the control of function control part 31, diagnostic result transmission requesting part 34 forms the diagnostic result transmission request frame. The diagnostic result transmission request frame prepared by diagnostic result transmission requesting part 34 is transmitted by transmitting part 32 to ECUs 10. The diagnostic result information frames are then transmitted from ECUs 10 in response to the diagnostic result transmission request frame transmitted in step S31. In step S32, the diagnostic result information frames from ECUs 10 are received by receiving part 33 and are sent to function control part 31. In step S33, function control part 31 stores the diagnostic result information frames from ECUs 10. In decision block S34, under the control of function control part 31, receiving part 33 determines whether vehicle onboard gateway device 20 has transmitted the diagnostic result transmission request frame. When the diagnostic result transmission request frame has been transmitted from vehicle onboard gateway device 20, control moves to step S34, where function control part 31 reads the diagnostic result information frames from the ECUs that have been stored, and transmits them in a block via transmitting part 32 to vehicle onboard gateway device 20.

Processing at the vehicle onboard gateway device 20 is shown in Figure 12. In step S41, diagnostic result transmission requesting part 41 forms a diagnostic result transmission request frame. The diagnostic result transmission request frame formed by the diagnostic result transmission requesting part 41 is transmitted from transmitting part 26a to diagnostic device 30. Then, in response to the diagnostic result transmission request frame transmitted in step S41, the diagnostic result information frames for ECUs 10 are summarized and transmitted from diagnostic device 30, the diagnostic result information frames for ECUs 10 are received by receiving part 21a in step S42 and sent to connection node recognition part 22.

Then, in step S43, using the same scheme as that in the first embodiment, connection node recognition part 22 performs an overall analysis of the diagnostic result information frames from ECUs 10, and processing is performed to recognize ECUs 10 connected as nodes of communication networks NT1, NT2. Then, in step S44, based on the recognition result of connection node recognition part 22, transfer frame designation part 23 performs processing to designate the data frames that should be transferred between communication network NT1 and communication network NT2 by means of vehicle onboard gateway device 20.

As explained above, in the vehicle onboard communication system of the third embodiment, in response to the diagnostic result transmission request frame transmitted from diagnostic device 30, the diagnostic result transmission request frames transmitted from ECUs 10 are received by the diagnostic device 30 itself, and the diagnostic result information frames from ECUs 10 are summarized and sent to vehicle onboard gateway device 20. Based on the diagnostic result information frames from ECUs 10 transmitted by vehicle onboard gateway device 20 from diagnostic device 30, which ECUs 10 are actually connected to communications buses B1, B2 as nodes of communication networks NT1, NT2 is recognized. Then, based on this recognition result, data frames that should be transferred between communications bus B1 of communication network NT1 and communications bus B2 of communication network NT2 are designated as transfer frames. Consequently, for this vehicle onboard communication system, just as in the first and second embodiments, even when certain communication problems occur among ECUs 10 connected to communications buses B1, B2 as nodes of communication networks NT1, NT2, these ECUs 10 connected to communications buses B1, B2 as nodes of communication networks NT1, NT2 are reliably recognized, and processing for designating of the transfer frames, etc. can be performed appropriately.

Also, in the vehicle onboard communication system of the third embodiment, ECUs 10 connected as nodes to communication networks NT1, NT2 can be configured corresponding to the diagnostic result transmission request from diagnostic device 30, and there is no need to make changes according to the request from vehicle onboard gateway device 20. Consequently, as with the Embodiment 2, the constitution of ECU 10 can be simplified.

In the example, vehicle onboard gateway device 20 transmits the diagnostic result transmission request frame to diagnostic device 30, and when diagnostic device 30 receives the diagnostic result transmission request frame from vehicle onboard gateway device 20, the diagnostic result information frames from ECUs 10 are transmitted to vehicle onboard gateway device 20. However, one may also adopt a scheme in which diagnostic device 30 transmits the diagnostic result information frames from ECUs 10 to vehicle onboard gateway device 20 at any timing. In this case, diagnostic result transmission request part 41 of vehicle onboard gateway device 20 is not needed.

### Fourth Embodiment

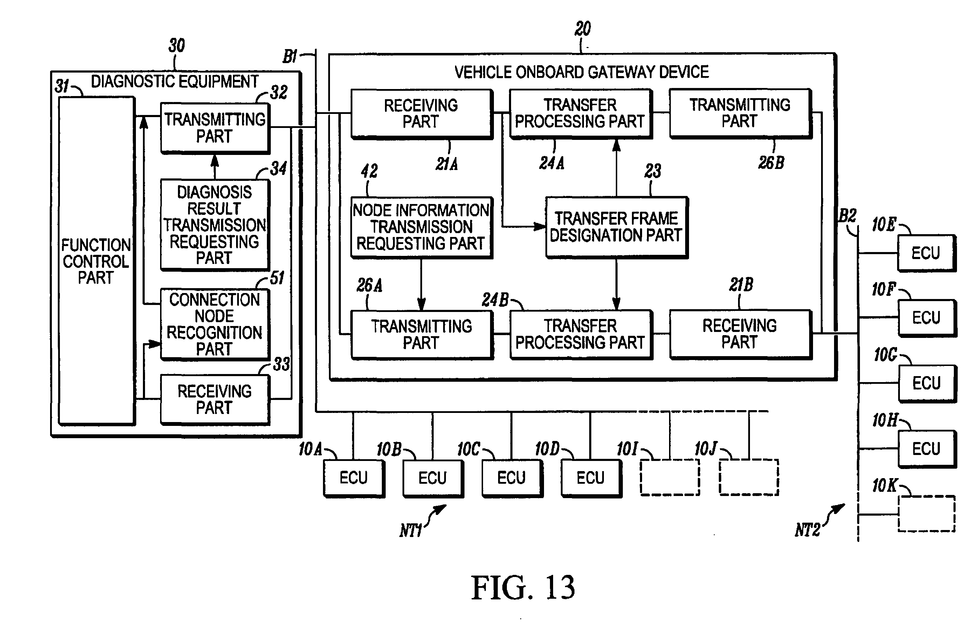

Referring to Figures 13-15, the fourth embodiment is illustrated. In this example, the vehicle onboard communication system performs the following operation: the diagnostic result information transmitted from ECUs 10 is received by diagnostic device 30 to enable recognition of the connecting nodes, and the result is transmitted to vehicle onboard gateway device 20. Based on the node information transmitted from diagnostic device 30, vehicle onboard gateway device 20 designates the transfer frames. The other basic features of this constitution of the vehicle onboard communication system are the same as those in the first through third embodiments. Consequently, in the following, an explanation will be given only regarding the characteristic features of the fourth embodiment, while the same part numbers are adopted for parts the same as those in the first through third embodiments, and will not be explained again.

As shown in Figure 13, the vehicle onboard communication system of the fourth embodiment has connection node recognition part 51 provided in diagnostic device 30. Just as with connection node recognition part 22 of vehicle onboard gateway device 20 in first through third embodiments, connection node recognition part 51 recognizes ECUs 10 connected as nodes of communication networks NT1, NT2 based on the diagnostic result information frames from ECUs 10. The recognition results of connection node recognition part 51 are stored as the node information in the memory inside the connection node recognition part 51 or function control part 31.

In the vehicle onboard communication system of the present embodiment, node information transmission requesting part 42 that requests transmission of the node information stored by diagnostic device 30 is provided in vehicle onboard gateway device 20. Also, in the vehicle onboard communication system of the present embodiment, connection node recognition part 51 is provided in diagnostic device 30. Consequently, there is no need to have connection node recognition part 22 in vehicle onboard gateway device 20.

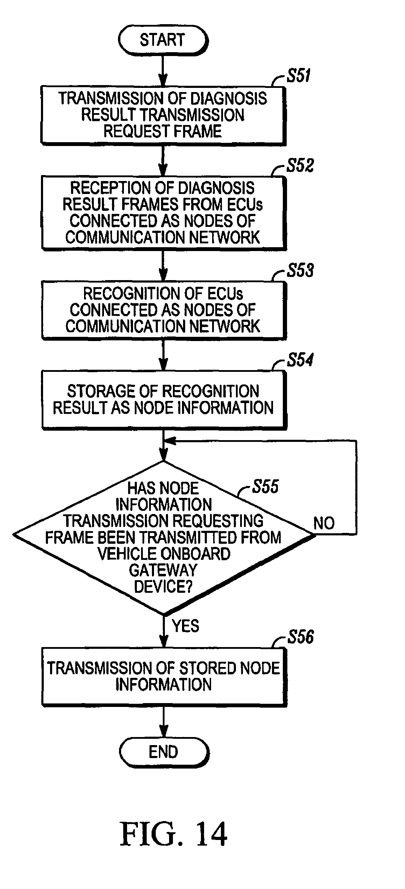

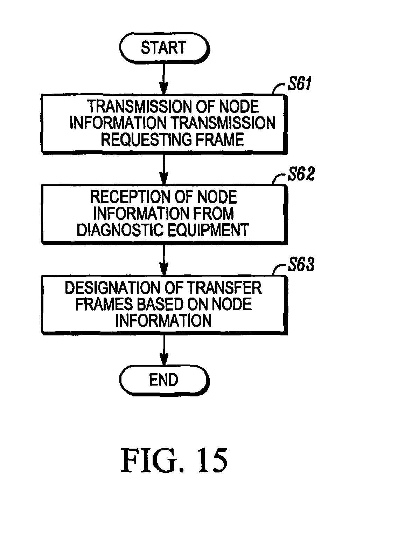

For the vehicle onboard communication system of the fourth embodiment, recognition of the connecting nodes is performed by diagnostic device 30 according to the sequence shown in Figure 14. Vehicle onboard gateway device 20 designates the transfer frames according to the sequence shown in Figure 15.

In step S51, under the control of function control part 31, diagnostic result transmission requesting part 34 forms the diagnostic result transmission request frame. The diagnostic result transmission request frame formed by diagnostic result transmission requesting part 34 is transmitted from transmitting part 32 to ECUs 10. The diagnostic result information frames are then transmitted from ECUs 10 in response to the diagnostic result transmission request frame transmitted in step S51. In step S52, the diagnostic result information frames from ECUs 10 are received by receiving part 33, and are sent to connection node recognition part 51. Then, in step S53, using the same method as that of connection node recognition part 22 in vehicle onboard gateway device 20 in the first embodiment, connection node recognition part 51 performs an overall analysis of the diagnostic result information frames from ECUs 10, and processing is performed to recognize ECUs 10 connected as nodes of communication networks NT1, NT2. In step S54, the recognition result in step S53 is stored as the node information. At decision block S55, function control part 31 determines whether the node information transmission requesting frame has been transmitted from vehicle onboard gateway device 20 and received by receiving part 33. When the node information transmission requesting frame has been transmitted from vehicle onboard gateway device 20, then control moves to step S56, where the stored node information is transmitted from transmitting part 32 to vehicle onboard gateway device 20 in response to the node information transmission requesting frame from vehicle onboard gateway device 20.

Referring to Figure 15, processing at the vehicle onboard gateway device 20 side is illustrated. At Step S61, node information transmission requesting part 42 forms the node information transmission requesting frame. The node information transmission requesting frame formed by node information transmission requesting part 42 is transmitted from transmitting part 26a to diagnostic device 30. Then, in response to the node information transmission requesting frame transmitted in step S61, the node information is transmitted from diagnostic device 30, and the node information from diagnostic device 30 is received by receiving part 21a and transmitted to transfer frame designation part 23. Then, in step S63, based on the node information from diagnostic device 30, transfer frame designation part 23 uses the same scheme as that in first embodiment to designate the data frames that should be transferred between communication network NT1 and communication network NT2 by vehicle onboard gateway device 20.

As explained above, for the vehicle onboard communication system of the present embodiment, based on the diagnostic result information frames transmitted from ECUs 10, diagnostic device 30 recognizes the connection nodes, and stores the recognition result as the node information. In response to the node information transmission requesting frame from vehicle onboard gateway device 20, the node information is transmitted to vehicle onboard gateway device 20, and based on the node information transmitted from diagnostic device 30, vehicle onboard gateway device 20 designates as transfer frames the data frames that should be transferred between communications bus B1 of communication network NT1 and communications bus B2 of communication network NT2. Consequently, for this vehicle onboard communication system, just as in the first three embodiments, even when communication problems occur in certain ECUs among ECUs 10 connected to communications buses B1, B2 as nodes of communication networks NT1, NT2, ECUs 10 connected to communications buses B1, B2 as nodes of communication networks NT1, NT2 can be recognized, and designation of the transfer frames or other processing can be performed appropriately.

Also, for the vehicle onboard communication system of the present embodiment, ECUs 10 connected as nodes of communication networks NT1, NT2 can be configured corresponding to the diagnostic result transmission request from diagnostic device 30, and it is not necessary to make changes according to a request from vehicle onboard gateway device 20. Consequently, just as in the second and third, it is possible to further simplify the constitution of ECU 10.

In the example, vehicle onboard gateway device 20 transmits a node information transmission requesting frame to diagnostic device 30, and when the node information transmission requesting frame is received by diagnostic device 30 from vehicle onboard gateway device 20, the stored node information is transmitted to vehicle onboard gateway device 20. The diagnostic device 30 can transmit the node information at any time to vehicle onboard gateway device 20. In this case, node information transmission requesting part 42 of vehicle onboard gateway device 20 is not needed.

This application is based on Japanese Patent Application Nos. 2005-176489, filed June 16, 2005, in the Japanese Patent Office, the entire contents of which are hereby incorporated by reference.

The above-described embodiments have been described in order to allow easy understanding of the present invention, and do not limit the present invention. On the contrary, the invention is intended to cover various modifications and equivalent arrangements included within the scope of the appended claims, which scope is to be accorded the broadest interpretation so as to encompass all such modifications and equivalent structures as is permitted under the law.

## Claims

1. A vehicle onboard communications gateway device (20) for transferring frames between a plurality of network-enabled units (10) connected as nodes on a plurality of networks, including at least a first one of the network-enabled units (10) adapted to generate and store a diagnostic result record pertaining to data units transmitted by at least a second one of the network-enabled units (10); the device (20) comprising:
at least one input/output channel (21, 26) adapted for communication with the plurality of network-enabled units (10) over the plurality of communication networks (NT1, NT2); and
a gateway logic circuit responsive to at least the first one of the network-enabled units (10) to detect the presence of at least the second one of the network-enabled units (10) on one of the communication networks (NT1, NT2), based on the diagnostic result record.

2. The vehicle onboard communications gateway device (20) of Claim 1, wherein the logic circuit is further adapted to generate a request for transmission of the diagnostic result record from at least the first one of the network-enabled units (10); acquire the diagnostic result record transmitted by at least the first one of the network-enabled units (10); and recognize the presence on the communication networks (NT1, NT2) of at least the second one of the network-enabled units (10) based on the diagnostic result record.

3. The vehicle onboard communications gateway device (20) of Claim 1 or Claim 2, wherein the at least one input/output channel (21, 26) is further adapted for communication with a diagnostic device (30) that is coupled to at least the first one of the network-enabled units (10) and adapted to enable the transmission of the diagnostic result record from at least the first one of the network-enabled units (10); and wherein the gateway logic circuit is further adapted to acquire either the diagnostic result record transmitted from at least the first one of the network-enabled units (10) or associated node information created by the diagnostic device (30), and recognize the presence on the communication networks (NT1, NT2) of at least the second one of the network-enabled units (10) based on the diagnostic result record or associated node information.

4. The vehicle onboard communications gateway device (20) of Claim 1 to 3, wherein the gateway logic circuit is further adapted to designate frames to be transferred between the first one of the network-enabled units (10) and the second one of the network-enabled units (10) based on the detection of the second one of the network-enabled units (10) on one of the communication networks (NT1, NT2).

5. The vehicle onboard communications gateway device (20) of Claim 1 to 3, wherein the gateway logic circuit is further adapted to analyze a frame to be transferred between the first and second network-enabled units (10) based on the detection of the second network-enabled unit on the communication networks (NT1, NT2).

6. A vehicle onboard communication system, comprising:
a plurality of communication networks (NT1, NT2) having thereon a plurality of network-enabled units (10), at least a first one of the network-enabled units (10) being adapted to a generate and store a diagnostic result record pertaining to data units transmitted by at least a second one of the network-enabled units (10); and
a gateway device (20) according to any of claims 1 to 5 coupled to the plurality of communication networks (NT1, NT2) and responsive to at least the first one of the network-enabled units (10) to recognize the presence of at least the second one of the network-enabled units (10) on one of the communication networks (NT1, NT2), based on the diagnostic result record.

7. The vehicle onboard communication system of Claim 6, wherein the gateway device (20) is adapted to request transmission of the diagnostic result record from at least the first one of the network-enabled units (10); acquire the diagnostic result record transmitted from at least the first one of the network-enabled units (10); and recognize the presence on the communication networks (NT1, NT2) of at least the second one of the network-enabled units (10), based on the diagnostic result record.

8. The vehicle onboard communication system of Claim 6 and Claim 7, further comprising a diagnostic device (30) coupled to at least the first one of the network-enabled units (10) and adapted to enable the transmission of the diagnostic result record from at least the first one of the network-enabled units (10); and
wherein the gateway device (20) is adapted to acquire either the diagnostic result record transmitted from at least the first one of the network-enabled units (10) or associated node information created by the diagnostic device (30), and recognize the presence on the communication networks (NT1, NT2) of at least the second one of the network-enabled units (10) based on the diagnostic result record or associated node information.

9. A method for communicating between networks installed on a vehicle and having thereon a plurality of network-enabled units (10), comprising:
generating on at least a first one of the network-enabled units (10) a diagnostic result record pertaining to data units transmitted by at least a second one of the network-enabled units (10);
requesting at least the first one of the network-enabled units (10) to transmit the diagnostic result record over one of the communication networks (NT1, NT2);
acquiring the diagnostic result record generated by at least the first one of the control units; and
detecting the presence of the second one of the control units on one of the communication networks (NT1, NT2) based on the diagnostic result record.

10. The method of Claim 9, wherein the vehicle is further provided with a gateway device (20) for transferring data between the plurality of networks; and wherein the gateway device (20) requests at least the first one of the control units to transmit the diagnostic result record and detects the presence of the second one of the control units on one of the communication networks (NT1, NT2) based on the diagnostic result record.

11. The method of Claim 10, wherein the vehicle is further provided with a diagnostic device (30) coupled to at least the first one of the network-enabled units (10), and wherein each of the processes can be carried out by either the diagnostic device (30) or the gateway device (20).

12. The method of any one of Claims 9 to 11, wherein the vehicle is further provided with a gateway device (20) for transferring data between the plurality of networks; and using the gateway device (20) to designate frames to be transferred between the first one of the network-enabled units (10) and the second one of the network-enabled units (10) based on the detection of the second one of the network-enabled units (10) on one of the communication networks (NT1, NT2).

13. The method of any one of Claims 9 to 11, wherein the vehicle is further provided with a gateway device (20) for transferring data between the plurality of networks; and using the gateway device (20) to analyze a frame to be transferred between the first and second network-enabled units (10) based on the detection of the second network-enabled unit on the communication networks (NT1, NT2).
